# EUROPEAN PATENT APPLICATION

(11) **EP 3 851 922 A1**
(43) Date of publication of application: **21.07.2021**
(21) Application number: 20152399.0
(22) Date of filing: 17.01.2020
(51) Int. Cl.: G05B 17/02, G05B 15/02

(54) **A METHOD FOR PROVIDING AN EVALUATION AND CONTROL MODEL FOR CONTROLLING TARGET BUILDING AUTOMATION DEVICES OF A TARGET BUILDING AUTOMATION SYSTEM**

(71) Applicant: ABB Schweiz AG, 5400 Baden (CH)
(72) Inventor: Schmitt, Johannes, 68526 Ladenburg (DE); Groß, Christian, 64347 Griesheim (DE)
(74) Representative: Kesselhut, Wolf

(57) **Abstract**

A method for providing an evaluation and control model for controlling target building automation devices of a target building automation system, wherein a plurality of pre-trained source evaluation and control models for controlling source building automation devices of a source building automation system is provided, and wherein for each pre-trained source evaluation and control model a semantic based description of the context in which the model was trained is generated, is characterized in that a semantic based description of the context of the target building automation system is generated, a semantic based description of the context of each pre-trained source evaluation and control model of said plurality of pre-trained source evaluation and control models is retrieved, and the generated semantic based description of the context of the target building automation system and the semantic based description of the context in which the pre-trained source evaluation and control models were trained are matched by using a semantic matchmaking concept.

## Description

The invention is related to a method for providing an evaluation and control model for controlling target building automation devices of a target building automation system according to the preamble of claim 1.

Building automation systems which control building automation devices are used in many large public buildings or office buildings, but also in residential buildings. In order to set up a building automation system it is necessary to connect all the building automation devices to a control unit and control them properly. As setting up all building automation devices manually is extremely time-consuming, it is generally desirable to provide a method which allows quick and easy configuration of building automation devices in a building automation system.

In EP 3 537 682 A1 of the applicant, a method for automatic configuration of semantic-based projects in building automation systems is described. Taking into account a function- or semantic-based description of the system, a planning and engineering model is generated which is based on a mapping complex, a structure of rules or processing instructions. The function- or semantic-based description of the system is uploaded to an associated control hardware, e.g. a central control unit for controlling the building automation devices connected thereto, in order to provide a running building automation system. The advantage of this method is that due to the semantic-based description of the building automation system and associated building automation devices, it is possible to create a working building automation system that combines different technologies and different communication protocols by translating between protocols and devices. This facilitates the setup of a building automation system significantly. However, in the afore-described system and method, all rules and processing instructions which are needed for running the system have to be created individually and have to be accounted for in the software which is generated to run the automatic configuration of the building automation system. Additionally, once the configuration of the system is completed, it is not possible to make any changes of the configuration without running the computer program again, which in case of a change calculates a new version for the targeted building automation system. This makes it cumbersome to adapt the system to any changes which are made to the configuration of the system, like changing or adding a sensor, etc. The same applies to changes which are made to the context of the building automation system.

The aforementioned disadvantage is addressed by systems which use artificial intelligence or self-learning concepts. These systems are using trained evaluation and control models which are created on the basis of training data. Typically, this training data contains a set of targeted resulting values (e.g. on/off state of a lamp) for certain situations which in turn are described by recorded sensor values within that situation (e.g. a brightness measurement). The training data is strongly related to the context in which training data was created to ensure that the trained evaluation and control model provides meaningful decisions. The context includes information about the sensors and actuators, or more generally speaking the building automation devices, such as their local position in a building or data formats and also information about the system itself, such as the orientation or the function of a room/building etc. Additionally, the context may comprise information about the used preprocessing of the sensor data before its application in the evaluation and control model (e.g. averaging, unit conversion, unbiasing, or summarizing of values over a time window).

To apply a trained model to a context, the input data must be applied in the same way as it was done when training the model. This can e.g. be done by means of a vector with the correct order of parameters. A model is typically persisted in a serialized way, without a description about the context which was used for training, so that often even the order of input parameters is typically not contained. As a consequence, if the targeted context differs from the context where the training data is derived from, the evaluation model is not applicable or provides bad results. Such differing context is typically given when pre-trained models are to be transferred and shipped to other/new setups having other types and configurations of sensors as used for the training of the model. Differences in the context that lead to bad results are e.g. different data formats, other data preprocessing steps, or differently placed or named sensors.

In known systems it is therefore difficult or even impossible to rate from the trained evaluation and control model about the context which was used for training the same. Thus it is typically not possible to determine if a model is suited for another context or not and/or which modifications have to be made in the preparation of the input data or the placement of the sensors, in order to successfully transfer a well working model appropriately to a new context.

As a result, self-learning concepts are only used in cases of equal contexts which use the same input parameters as the ones which were used for training (e.g. e-mail spam detection) or, alternatively, the specific model is trained for every new context individually which is apart from the need for sufficient training data a time-consuming task.

Accordingly, it is a task of the present invention to provide a method which reduces the time and workload to provide an evaluation and control model for controlling a building automation system that can be adapted to changes in context.

This task is solved by a method for providing an evaluation and control model using model semantic matchmaking with targeted application context as claimed in claim 1.

Further objects of the present invention are included in the dependent claims.

As applicant has found, a transfer of pre-trained models between differing contexts represents an advantageous way of providing a new model, because a pre-trained model can shorten the cold-start phase, i.e. the time and effort which is required for the training of a new model in a target context which can be e.g. a building automation system. Moreover, a transferred pre-trained model can already provide meaningful decisions in the start phase and can be adapted by further training.

According to the invention, a method for providing an evaluation and control model for controlling target building automation devices of a target building automation system, comprises providing a plurality of pre-trained source evaluation and control models for controlling source building automation devices of a source building automation system, wherein for each of the pre-trained source evaluation and control models, a semantic based description of the context in which the model was trained is generated. The method is characterized by the following method steps:
1. generating a semantic based description of the context of the target building automation system,
2. retrieving the semantic based description of the context of each pre-trained source evaluation and control model of said plurality of pre-trained source evaluation and control models, and
3. matching of the generated semantic based description of the context of the target building automation system and the semantic based description of the context in which the pre-trained source evaluation and control models were trained by using a semantic matchmaking concept.

The present invention is based on the idea to use the description of the context, in which a trained model which is used for evaluating input data of building automation devices and controlling the associated building automation devices of a building automation system, to provide a kind of fingerprint of the model. If a context can be described using a semantic or functional abstraction, similarities between the training context and the target context can be made. This allows that knowledge about the function of a sensor or the meaning of sensor data can be used to determine similarities even if the specific sensor device types or data formats are not matching. Similar matchmaking can be made upon other aspects which describe the model and the context. This can be for example the application or placement (position) of sensors (e.g. indoor, outdoor, floor, ceiling) or the aspect which was trained and where the resulting decision of the model shall be applied on (e.g. controlling a window position in an office room).

In the preferred embodiment of the method, at least one, but preferably all pre-trained source evaluation and control models are obtained by training of an associated source building automation system on basis of machine learning. In order to derive the semantics of the current context, semantic descriptions of sensors and actuators are preferably provided according to the Open Platform Communications Unified Architecture (OPC-UA) standard, which may be stored in a known memory. Alternatively, related information modelling approaches may be used. These may include aspects such as the semantics about a sensor type as well as a semantic description of the associated sensor values which the sensor delivers (unit, resolution, periodicity, etc.). In addition, aspects such as the system topology including the placement of a sensor or a building automation device in general within a room may be used. Alternatively, also the field of view may be included.

In a preferred embodiment of the method, the semantic based description of the context in which the pre-trained source evaluation and control model was trained, is based on a graph database, in particular in combination with a Web Ontology Language (OWL) or a Resource Description Framework (RDF). This allows for the use of ontologies and semantic matchmaking to compare different semantic descriptions. In the same way, the semantic based description of the context of the target building automation system is based on a graph database too, which uses a resource description framework (RDF) or web ontology language (OWL), in order to formulate task and queries related to the type, position, number and values of building automation devices which are to be controlled in the target building automation system.

According to another aspect of the invention, the matching or the matchmaking can be used to provide a rating about similarities which is based on a confidence measure. Such a confidence measure is typically used in semantic matchmaking algorithms (if required on each single aspect) and in case of differences, if certain modifications to the targeted context can be made to handle the differences (e.g. transformation of different data-formats, usage of similar pre-processing mechanisms, and the setup of a certain bias for sensor values, as well as a rearrangement of sensors).

According to another aspect of the present invention, based on the matchmaking, the selection of a suitable pre-trained source evaluation and control model and mechanisms to handle differences in the context of the pre-trained source evaluation and control model and the context of the targeted building automation system can be integrated automatically.

Moreover, in the case that there are multiple pre-trained source evaluation and control models available, a recommender system can make use of the similarities to select and propose the pre-trained source evaluation and control model which suits best for a new target context. In a preferred embodiment of the invention a recommended modification of the context of the target building automation system may be determined which improves the matching with at least one model of the plurality of pre-trained source evaluation and control models. Recommended modifications to the target context may include but are not limited to a rearrangement of sensors and/or actuators and/or placing of additional sensors or actuators.

For this purpose, the pre-trained source evaluation and control models may be displayed as a list on a display of a computing device, e.g. a mobile device and/or a display screen connected to a known computing device. In this embodiment, the user may be supported to manually select a most suitable pre-trained source evaluation and control model out of two or more generally suitable models which are displayed in the list. After selecting a desired, suitable model from the list, the model may be directly uploaded form the computing device to the target building automation system, or more specifically the controller thereof, to which the target building automation devices are connected. However, it is also conceivable, that the target building automation devices may be controlled via a mobile phone, e.g. by means of WIFI or bluetooth without using a central control unit. In this case, the selected control model is directly transferred to the control software running on the mobile phone which is used to control the target building automation devices of the target building automation system.

In the preferred embodiment of the invention the list may also include a matching score for each of the pre-trained source evaluation and control models that corresponds to a confidence measure of the semantic matchmaking with the target context. Furthermore, the context associated to the pre-trained source evaluation and control model may also be displayed for a selected model which is shown in the list.

According to a further aspect of the invention, also the differences between the context in which the pre-trained source evaluation and control model was trained and the context of the target building automation device may be determined and displayed on the display of the computing device. This provides for the advantage, that a user who wants to select one of the displayed suitable pre-trained source evaluation and control models for application in the new target context is able to make a decision based on the differences between the contexts, which may be highlighted on the display screen, in order to allow the user to evaluate the best suitable model at a glance.

In another embodiment of the present invention a model which is displayed in the list on the display screen may be automatically selected on basis of the matching score and uploaded to the target building automation system. Regardless of the selection process, the time-consuming task of (re-)training the model in the target building automation system can be avoided which leads to faster deployment and applicability of evaluation and control models to a given new context.

In the case that a pre-trained source evaluation and control model is a user specific model (i.e. the model describes the decisions of the user depending on a certain context), the user might transfer and apply the model to every new context which is entered (e.g. a smartphone that contains the model and the user enters a new room with specific sensors/actuators). In this embodiment of the method, it may be necessary that the context in which the pre-trained source evaluation and control model was trained, includes user specific information such as identification information and personal preferences. The same concept may be used in order to determine if and how a pre-trained user-specific evaluation and control model can be applied to the sensors in the new room in order to control the actuators in the room. Depending on the used model, also the training data may be packaged together with the model - e.g. in cases in which the model shall be further trained in another training iteration, also the previous training data set is required.

In order to describe the present invention in more detail, some examples of possible applications of the method will be given hereinafter.

### Transfer of trained models

The challenge is that on a building automation communication protocol level the sensor data and actuator setpoints are visible only as raw-datapoints. This means a software/component that records the raw-datapoints in order to train a model has to be configured in order to define which datapoints have to be taken into account and how. If a model shall evaluate/control something e.g. for a room, this configuration has to be done once per room.

However, in a typical office building many rooms have similarities regarding room-functionality and installed sensors and actuators - these similarities shall be used to auto-align sensor/actuator data with the model. To evaluate these similarities on a technical level the aspects which are relevant to determine similarities have to made available on a technical level, the context.
In the targeted scenario the context of a model that was trained to control the brightness of a room can contain information about the sensors (type and placement of the brightness-sensors, type and placement of the presence-sensors,...), the actuators (type and placement of the lights to be controlled, type and placement of the blinds,...), the targeted function of the model (control the light based on presence and brightness), the function of the room (e.g. meeting-room, kitchen, or office), the preprocessing (e.g. separated averaging of the brightness sensors inside the room and outside the building), the room-orientation (e.g. south side of the building in the first floor), and potentially also the users who were considered for training.

This context of a model can be used to decide which model can be re-used on which other rooms (e.g. same room-function, same position, same users,...), which sensors are required and have to be considered (e.g. similar type and placement - and if not perfectly matching how the sensors can be adapted e.g. un-bias the brightness value), and how the data has to be preprocessed (e.g. using the same averaging function) in order to re-use the model.

Finally, the pre-trained model can be re-used for many similar rooms. This reduces the configuration efforts and speeds up the initial phase of model-based brightness-control for all similar rooms.

### Recommender-system for trained models

In the office-scenario mentioned above a new employee can decide which model for the brightness-control he/her wants to use for his room.

The decision which model shall be used can be done automatically (e.g. using the best matching model, that is the model which comprises the most similarities or the least differences after the matchmaking according to the present method, and applying this model automatically, that is uploading this model into the control unit of the building automation system which controls the building automation devices included in the considered room. Alternatively, the selection of a suitable model may be done manually using a kind of recommender-system.
This recommender-system can support the user in the decision which model can be used - e.g. the user can get insights about the context of all available models, ordered by how good the contexts are matching.

The recommender-system may also provide insights into the differences between the context associated to a room and the context in which the model was trained in order to propose actions to be taken in order to suit to the context required for the model.
Such action to be taken may be the deployment of additional sensors of the required type or the repositioning of a sensor (e.g. the change of the distance of a brightness sensor to a window).

According to another aspect of the invention, the model which is used for brightness-control in an office-scenario could be managed by the user's mobile phone. If an application on the mobile phone is able to interact with building automation devices (e.g. the sensors and actuators) and/or the central control unit for controlling the building automation devices in the room, it can provide a similar model-based brightness-control of the sensors and actuators or a central control unit for controlling them, respectively. If this user is now moving between different rooms, the model trained for brightness-control of one room can be re-used also for other rooms using the same concepts as in the scenarios mentioned above. By matchmaking between the context of the model(s) in the user's mobile phone with the context of the room, the user is actually in, the application on the mobile phone can take the decision automatically and decide if a or which model can be used and how. This means if the actual room has a similar context (e.g. also an office room) and similar sensors (e.g. same type and placement) the model can be used to control the lights (if they are of a similar type and placement as the ones used for training).

The invention is hereinafter described with reference to the accompanying drawings.

In the drawings:
- Fig. 1: shows an exemplary flowchart illustrating the steps of providing an evaluation and control model for a target building automation system according to the state of the art,
- Fig. 2: shows an exemplary flowchart illustrating the steps of the method for providing an evaluation and control model for a target building automation system according to the invention, and
- Fig. 3: illustrates an exemplary embodiment of the method in the specific case of controlling the lighting in a target building automation system.

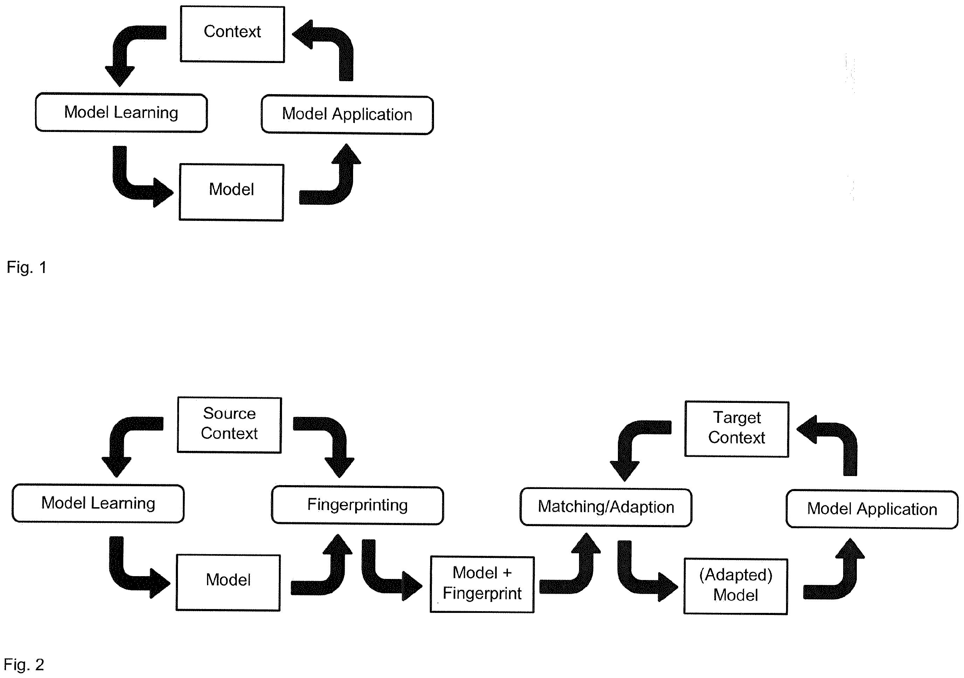

In Fig. 1 the traditional concept of providing a pior art evaluation and control model for a building automation system is shown. At the starting point, an untrained model is provided which is applied to a building automation system in a target context. The model is then trained in the target context. The time and effort that is required to train a model is crucial for many use-cases. There has to be sufficient amount of training data for each scenario that has to be considered in order to generate a evaluation and control model that provides meaningful decision.

The starting point of the method according to the present invention which provides an evaluation and control model using model semantic matchmaking with targeted application context is shown in Fig. 2. The starting point here is a pre-trained source evaluation and control model which was trained in the context of a source building automation system.

According to the invention the method steps are executed in the following way. First, a semantic description of the context of the target automation system is generated. Then the semantic description of the context of each model out of a plurality of pre-trained source evaluation and control models is retrieved. In the next step the semantic matchmaking of the semantic descriptions of the pre-trained source evaluation and control models and the target automation system is done. The matchmaking results, including the matching score of each of the pre-trained source evaluation and control models, are combined in a list which is then displayed on a display screen, in particular of a mobile device. On the display screen, preferably a recommended modification to the context of the target building automation system is presented and the user is prompted to choose one of the pre-trained source evaluation and control models from the list.

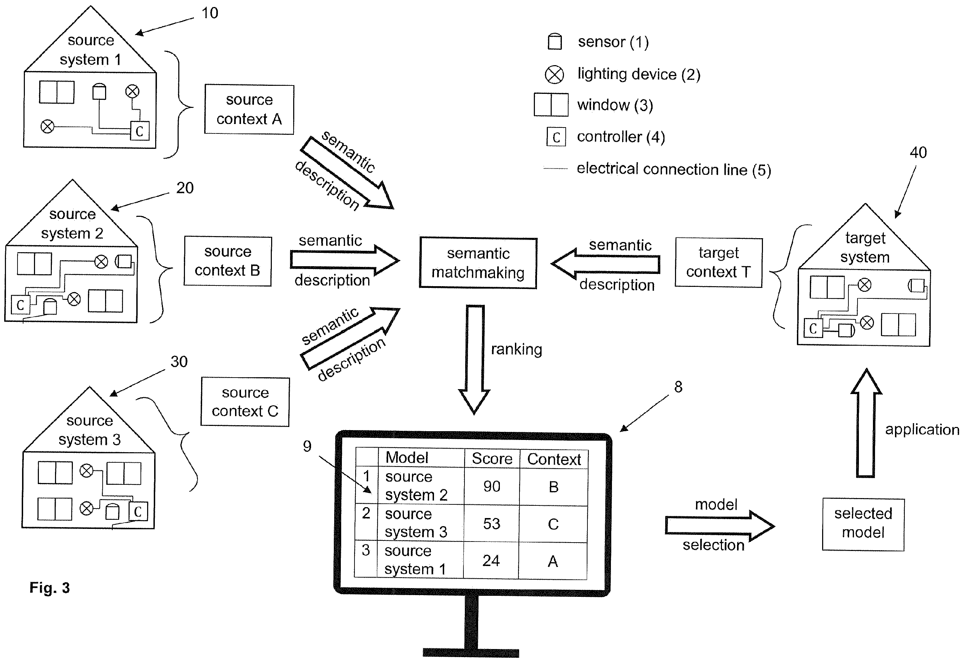

Fig. 3 illustrates the afore described method steps for an exemplary case in which the lighting of a target building automation system 40 shall be controlled by an evaluation and control model. As can be seen from figure 3, three different pre-trained source evaluation and control models which were trained before in three different source building automation systems 10, 20, 30 are available for transfer to the target building automation system 40, that is to be uploaded to the central control unit of the target building automation system 40. The context A, B, C of each source building automation system 10, 20, 30 is indicated by means of the placement of sensors 1, lighting devices 2, windows 3 and a controller 4 which controls the sensors 1 and the lighting devices 2 and all other building automation devices (which are not shown for reason simplicity), via electrical connection lines 5.

In the same way the context T of the target building automation system 40 is generated. Then the semantic based description of the context A, B, C of each pre-trained source evaluation and control model is retrieved and matched with the semantic based description of the context T of the target building automation system 40 via a semantic matchmaking concept. In the following step the results of the matchmaking are displayed in a list 9 on the screen 8 which also shows the matching score as well as details regarding the context A, B, C of each of the source building automation systems 10, 20, 30. In this illustration the scores were chosen as arbitrary values between 0 and 100 whereas 100 equals perfect matching and 0 equals no common features. Finally, a model is selected either by the user or automatically and is applied to the target building automation system 40 in a further step. To do so, the selected model may be uploaded to the controller 4 for controlling the target building automation devices 1 and 2 of the target building automation system 40.

### Listing of reference numerals

- 1: sensor
- 2: lighting device
- 3: window
- 4: control unit of building automation systems
- 5: electrical connection line
- 8: display screen
- 9: list
- 10: source building automation system 1
- 20: source building automation system 2
- 30: source building automation system 3
- 40: target building automation system

## Claims

1. A method for providing an evaluation and control model for controlling target building automation devices of a target building automation system, wherein a plurality of pre-trained source evaluation and control models for controlling source building automation devices of a source building automation system is provided, and
wherein for each pre-trained source evaluation and control model a semantic based description of the context in which the model was trained is generated,
**characterized by** the following method steps:
generating a semantic based description of the context of the target building automation system,
retrieving the semantic based description of the context of each pre-trained source evaluation and control model of said plurality of pre-trained source evaluation and control models,
and matching the generated semantic based description of the context of the target building automation system and the semantic based description of the context in which the pre-trained source evaluation and control models were trained by using a semantic matchmaking concept.

2. Method according to claim 1,
**characterized in that**
at least one and preferably all pre-trained source evaluation and control models are obtained by training an associated source building automation system on basis of machine learning.

3. Method according to claim 1 or 2,
**characterized in that**
the pre-trained source evaluation and control models are displayed as a list on a mobile device and/or display screen, wherein the list includes a matching score which corresponds to a confidence measure of the semantic matchmaking together with the context associated to the pre-trained source evaluation and control model.

4. Method according to claim 3,
**characterized in that** the differences in the context in which the pre-trained source evaluation and control model was trained and the context of the target building automation device are determined and are displayed on the mobile device and/or the display screen.

5. Method according to claim 3 or 4,
**characterized in that**
a model displayed on the list can be manually selected and uploaded to the target building automation system.

6. Method according to claim 3 or 4,
**characterized in that**
a model displayed on the list is automatically selected on basis of the matching score and uploaded to the target building automation system.

7. Method according to any of the preceding claims,
**characterized in that**
a recommended modification of the context of the target building automation system is determined which improves the matching with at least one of the pre-trained source evaluation and control model of the plurality of pre-trained source evaluation and control models.

8. Method according to any of the preceding claims,
**characterized in that**
the semantic based description of the context in which the pre-trained source evaluation and control model was trained is based on a graph database, preferably a resource description framework (RDF) or web ontology language (OWL).

9. Method according to any of the preceding claims,
**characterized in that**
the semantic based description of the context of the target building automation system is based on a graph database, preferably a resource description framework (RDF) or web ontology language (OWL).

10. Method according to any of the preceding claims,
**characterized in that**
the context in which the pre-trained source evaluation and control model was trained includes user specific information, in particular identification information and personal preferences.

11. Method according to any of the preceding claims,
**characterized in that**
the target building automation devices of the target building automation system are devices for controlling the brightness in a room, wherein the plurality of pre-trained source evaluation and control models are trained for controlling the brightness of a room, and wherein the context of the pre-trained source evaluation and control models includes information about the type and the placement of sensors and/or actuators and/or light sources in a room, and/or the function of a room and/or the orientation of a room and/or information about pre-processing of the sensor data, such as averaging or data type conversion.
